# EUROPEAN PATENT SPECIFICATION

(11) **EP 4 275 009 B1**
(45) Date of publication and mention of the grant of the patent: **13.05.2026**
(21) Application number: 22702081.5
(22) Date of filing: 07.01.2022
(51) Int. Cl.: F28D 7/12, F28F 21/06

(54) **PROCESS COOLING ROD**
PROZESSKÜHLSTAB
TIGE DE REFROIDISSEMENT DE PROCÉDÉ

(30) Priority: 08.01.2021 US 202117144424; 06.09.2021 US 202117467397
(43) Date of publication of application: 15.11.2023
(60) Divisional application: 26162449.8
(73) Proprietor: SaniSure, Inc., Camarillo, CA 93012 (US)
(72) Inventor: BALLEW, Chris, Thousand Oaks, CA (US); SHOR, Richard, Moorpark, CA (US)
(74) Representative: Forresters IP LLP
(86) International application number: PCT/US2022/011634
(87) International publication number: WO 2022/150600

(56) References cited:
- EP-A1- 2 853 584
- US-A- 3 954 097
- US-A- 4 452 233
- US-A1- 2014 363 146

## Description

### BACKGROUND

### Field

This disclosure relates to a heat exchange element for chemical and biological processes.

### Description of the Related Art

Various chemical and biological processes in lab settings generate heat. For example, constant filtration of a process medium can quickly raise the temperature of the medium leading to deleterious outcomes, especially for fragile biological cells grown in media. A standard technique for reducing the temperature of process contents is to place the reactor or container within an ice bath. However, this introduces a number of challenges, not the least of which is accurately and consistently regulating the amount of cooling. Processes also sometimes require the addition of heat in regulated amounts.

US-A-2014363146 discloses a conventional screw-in heat exchanging element for water heaters.

There remains a need for a rapid heat exchange solution for chemical and biological processes that accurately and consistently regulates the amount of cooling or heating.

### SUMMARY OF THE INVENTION

According to one aspect of the present invention, there is provided a device as defined in claim 1 hereinafter.

The present application discloses a process cooling element in the shape of a rod is described which can be inserted into a bioreactor or other reactor vessel to regulate the temperature. A method of use of the process cooling element includes immersing the rod into a liquid within a process vessel, the rod extending to at least 2.54 cm (1 inch) of the floor of the vessel to enable heat transfer with even small amount of liquid in the vessel. A manifold that projects out of the vessel has a fluid inlet connector and a fluid outlet connector. The cooling element includes an outer jacket and an inner flow diverter that extends from the manifold to a closed distal end of the outer jacket. The flow diverter has a central through bore and one or more outer helical flutes that contact an inner wall of the jacket and define one or more helical flow passages the length of the flow diverter. The method includes flowing cooling fluid into the inlet connector which travels down through the central bore and then up through the helical flow passage(s) to the outlet connector. The flow may be reversed so that the inlet becomes the outlet. The outer jacket and flow diverter are desirably formed of a polymer, sometimes transparent, with a high coefficient of heat transfer; which may be greater than 0.50 W/mK @23C or even greater than 0.90 W/mK @23C.

A first embodiment of a device disclosed herein comprises a fluid process heat exchange rod for heating or cooling fluid in a process vessel. The first embodiment has an elongated polymer outer jacket extending along an axis defining a closed distal end and an open proximal end, an inner cavity defined within the outer jacket. A manifold attaches to the proximal end of the outer jacket and has two connectors providing fluid communication with the inner cavity; a first connector being offset from a centerline through the manifold and a second connector being located along the centerline and aligned with the outer jacket axis. An elongated polymer flow diverter is positioned within the inner cavity. The flow diverter extends from the manifold to a point spaced from the closed distal end such that a distal space is formed in the inner cavity between the flow diverter and the closed distal end. The flow diverter has a central inner bore extending the length of the flow diverter and being in fluid communication with the second connector to fluidly connect the second connector and the distal space. The flow diverter also has an outer surface defined by at least one helical flute extending the length of the flow diverter and having an outer diameter approximately equal to an inner diameter of the outer jacket so as to be in contact therewith. The at least one helical flute defines at least one helical groove spaced inward from the inner diameter of the outer jacket that forms at least one helical flow passage between the flow diverter and the outer jacket fluidly connecting the first connector and the distal space. The heat exchange rod is configured such that fluid flowing into the second connector passes distally through the inner bore to the distal space, and returns proximally from the distal space through the at least one helical flow passage to the first connector, and fluid flowing into the first connector passes distally through the at least one helical flow passage to the distal space, and returns proximally from the distal space through the inner bore to the second connector. The fluid flowing through the heat exchange rod is therefore adapted to heat or cool fluid within the process vessel. Further, according to the invention there are two parallel helical flutes formed in the flow diverter that define two parallel helical grooves. The elongated jacket may be linear and tubular and the closed distal end hemispherical.

A second embodiment of a device disclosed herein comprises essentially the same fluid process heat exchange rod for heating or cooling fluid in a process vessel described above. However, instead of having flow diverter with an outer surface defined by at least one helical flute, the flow diverter outer surface is defined by ribs extending the length of the flow diverter having an outer diameter approximately equal to an inner diameter of the outer jacket so as to be in contact therewith. The ribs define at least one flow passage between the flow diverter and the outer jacket fluidly connecting the first connector and the distal space, and heat exchange fluid flows through the at least one flow passage.

In any embodiment described herein, the outer jacket and the flow diverter may be injection molded of a polymer having a heat transfer coefficient of at least 0.50 W/mK @23C, or at least 0.90 W/mK @23C. The polymer may be transparent, and may be a polypropylene base resin.

According to the invention, the device further includes a process vessel adapted for holding fluid, the process vessel having an upper wall, wherein the heat exchange rod is mounted to the upper wall of the process vessel such that the closed distal end of the outer jacket extends downward toward a bottom of a main portion of the process vessel so as to be submerged in fluid within the process vessel. The process vessel is a flask having a large main portion and an upwardly angled shoulder region that forms the upper wall, and the heat exchange rod mounts through a hole formed in the upper wall such that the closed distal end of the outer jacket extends downward toward a bottom of the main portion of the process vessel.

### DESCRIPTION OF THE DRAWINGS

FIG. 1 is a perspective view of an exemplary process cooling rod;
FIG. 2 shows the process cooling rod in longitudinal section;
FIG. 3 is an exploded view of the process cooling rod;
FIG. 4 shows a process vessel having the exemplary process cooling rod mounted through an upper wall thereof with a sealing sleeve;
FIG. 5 is an enlargement of an upper wall of a process vessel showing an alternative mounting arrangement for the process cooling rod, and FIG. 6 is a vertical sectional view therethrough;
FIG. 7 is an enlargement of an upper wall of a process vessel showing a tri-clamp mounting assembly for the process cooling rod, and FIG. 8 is an exploded vertical sectional view therethrough;
FIG. 9 is an enlargement of an upper wall of a process vessel showing a threaded mounting arrangement for the process cooling rod, and FIG. 10 is a vertical sectional view therethrough; and
FIG. 11 is a cutaway view of an exemplary flask having an internal mixer with vanes journaled to rotate about a lower floor thereof and showing placement of the exemplary process cooling rod therein.

### DETAILED DESCRIPTION

A process cooling element in the shape of a rod is described which can be inserted into a bioreactor or other reactor vessel to regulate the temperature. The primary application of the cooling rod is to reduce the temperature of the medium, but it should be understood that the beneficial attributes of the cooling rod also apply to raising the temperature of a process medium, and thus, more broadly, a heat exchanging element or rod is disclosed. Additionally, the cooling element is preferably shaped as an elongated linear rod, but could be adapted into other shapes, such as a curved rod or an irregular shape that mirrors the shape of the vessel in which it is used. Moreover, the size of the process cooling rod may vary depending on the cooling capacity required, and though a single cooling rod is shown in the exemplary application, multiple cooling rods can be used. Finally, preferred materials for the cooling rod are described, but should not be considered limiting unless explicitly claimed.

One particularly useful application for the process heat exchange element is to heat and thus thin out liquids such as manufactured drugs during a filling step. That is, the heat exchange element may be placed in close proximity to a filling needle descending into a process vessel containing liquid drugs. The efficient heating of the liquid immediately surrounding the fill needle thins the liquid and thus facilitates withdrawal from the vessel. Another application is during ultra-filtration of various media. Certain filters used in bioreactors tend to build up retentate and heat up from the added resistance to fluid flow therethrough. The heating may damage the valuable media, and placing the heat exchange element in the fluid.

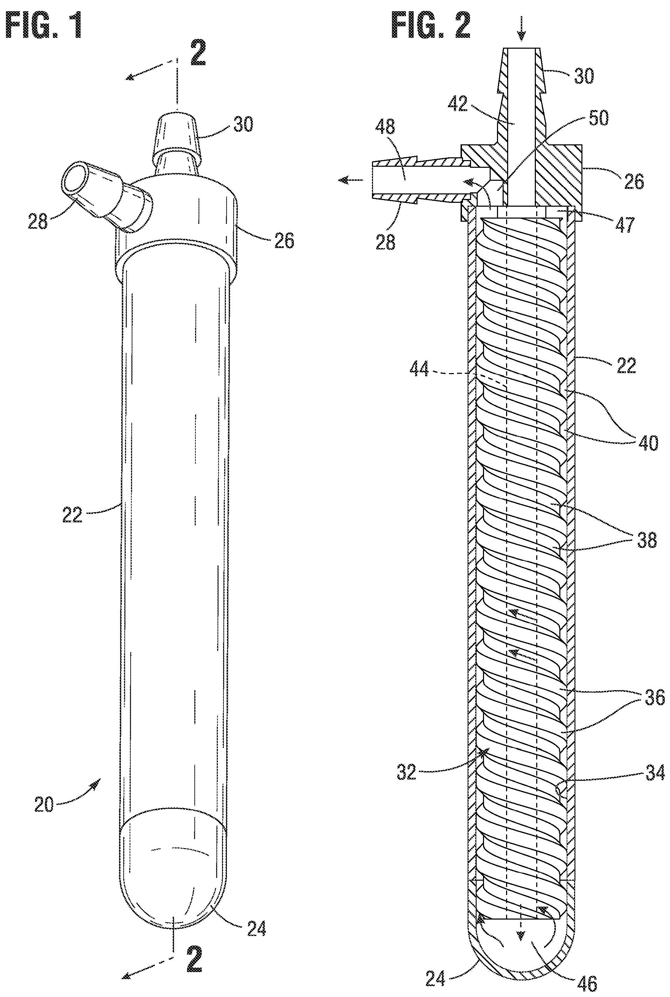

FIG. 1 is a perspective view of an exemplary process cooling rod 20, and FIG. 2 shows the exemplary process cooling rod 20 in longitudinal section. In the exemplary embodiment, the cooling rod 20 includes a hollow outer housing or jacket 22 having a closed end 24 and a hub or manifold 26 secured to an open end of the housing opposite the closed end. The manifold 26 provides a mount and internal passages for a first connector 28 and a second connector 30. The outer jacket 22 may be tubular and linear, defining a longitudinal axis, with the closed end 24 being formed by a hemispherical cap. The manifold 26 has a generally cylindrical configuration and is sealingly attached around the outside of the open end of the jacket 22, as seen in section in FIG. 2. Adhesives or heat bonding may be used to connect the parts. The first connector 28 projects radially from the manifold 26, while the second connector 30 projects axially and is centered along the longitudinal axis. Both connectors 28, 30 may be formed as conventional hose barbs.

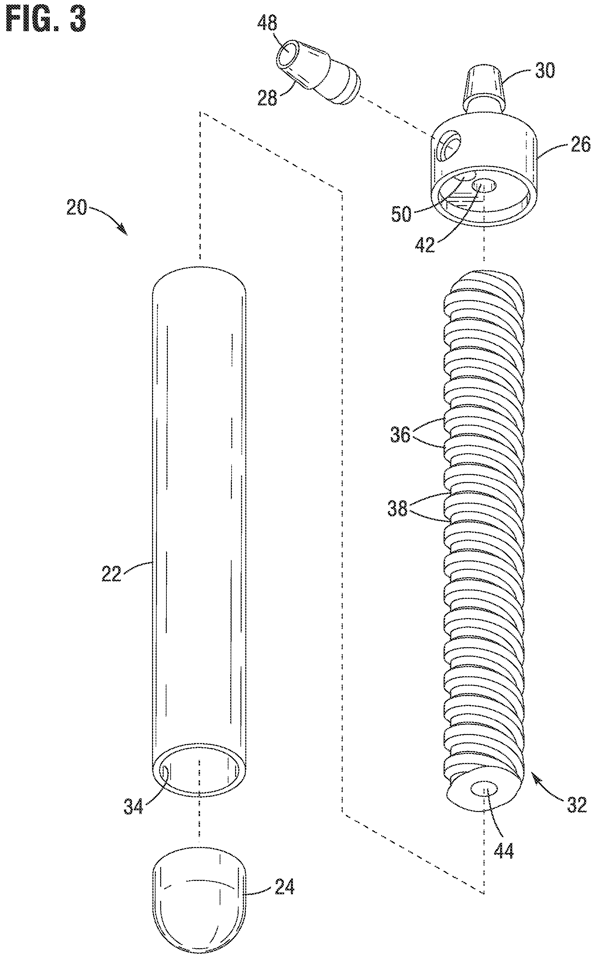

With reference also to the exploded view of FIG. 3, an elongated flow diverter 32 fits closely within an inner wall 34 of the tubular jacket 22 and extends substantially its entire length. The flow diverter 32 defines helical ribs or flutes 36 which have flat outer lands sized approximately the same as the diameter of the inner wall 34. The helical flutes 36 are sized and have a pitch such that there are two parallel flutes extending the length of the diverter 32. Recessed helical grooves 38 are formed between the flutes 36 which define helical flow passages 40 within the inner wall 34.

The axially-oriented second connector 30 defines a central through bore 42 centered on the longitudinal axis which is in fluid communication with a central bore 44 through the flow diverter 32. The bore 44 extends the length of the flow diverter 32 between the manifold 26 and a plenum chamber 46 defined between a distal end of the diverter and the inside wall of the hemispherical cap 24. As seen by the arrows, pressurized fluid flowing into the through bore 42 of the connector 30 travels downward through the bore 44 until it reaches the plenum chamber 46.

The helical grooves 38 are open to the bottom end of the flow diverter 32 and thus the pressurized fluid within the plenum chamber 46 travels upward along the grooves. Eventually, fluid reaches the top of the flow diverter 32 and enters an annular space 47 defined within the outer jacket 22 and manifold 26. An outlet flow passage 48 formed within the first radially-oriented connector 28 communicates with the annular space 47 via a short axial passage 50 in the manifold 26. Of course, it should be understood that the flow can be reversed with the pressurized fluid entering through the first connector 28 and traveling downward through the helical grooves 38 and upward through the central bore 44. Either way, a constant flow of cooling (or heating) fluid can be circulated through the process cooling rod 20. Although not shown, the heat exchange medium may be circulated through a chiller or heater external to the heat exchange rod 20 and positioned near to the process vessel.

As seen in FIG. 3, the first connector 28 may be an item that is separately molded from the manifold 26. The second connector 30 may also be separate, but as seen in section in FIG. 2, is desirably molded as one piece with the manifold.

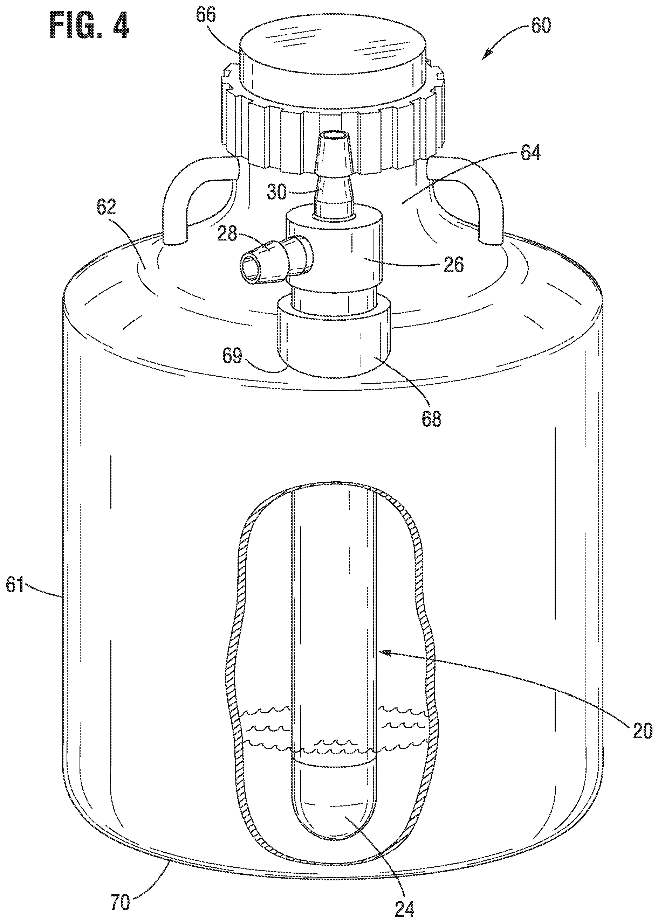

FIG. 4 shows a process vessel 60 having the exemplary process cooling rod 20 mounted through an upper wall 62 thereof. In the illustrated embodiment, the process vessel 60 is a large flask having a generally cylindrical main portion 61 and an upwardly angled shoulder region that forms the upper wall 62. The vessel 60 continues upward into a neck region 64 leading to an upper mouth closed by a cap 66. The cap 66 may be replaced with a stirring assembly in some applications.

For sterility, a sleeve or other type of sealing sleeve 68 may be secured between the cooling rod 20 and a hole 69 through the upper wall 62. The sealing sleeve 68 may be removable, or the cooling rod 20 may be assembled (bonded or welded) with the process vessel 60 using the sealing sleeve 68, and sold as a single unit, thus providing a built-in option for cooling or heating the process fluid within the vessel. The sealing sleeve 68 may be elastomeric or a more rigid polymer bonded or welded to both the cooling rod 20 and the hole through the upper wall 62.

The cooling rod 20 extends downward into the process vessel 60 until the closed end cap 24 is in close proximity to a floor 70 of the vessel. In one embodiment, the length of the cooling rod 20 is such that when mounted through the sealing sleeve 68 the closed end cap 24 extends to within 2.54 cm (1 inch) of the floor 70 of the vessel 60. In this way, the cooling rod 20 reaches even low levels of fluid in the bottom of the vessel, as shown, to commence heat exchange therewith.

Although not shown, inlet and outlet tubular fluid conduits are then attached to the first and second connectors 28, 30 projecting from the manifold 26 to initiate cooling (or heating) flow through the cooling rod 20. As will be understood by those of skill in the art, the temperature and flow rate of the fluid through the cooling rod 20 can be varied so as to accurately regulate the temperature of the fluid within the vessel 60.

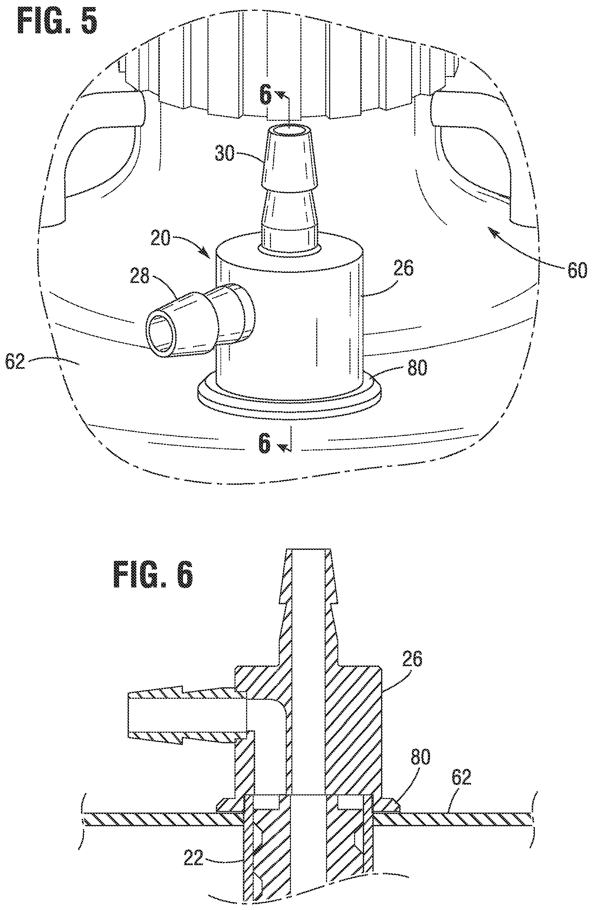

FIG. 5 is an enlargement of an upper wall 62 of a process vessel 60 showing an alternative mounting arrangement for the process cooling rod 20. FIG. 6 is a vertical sectional view of the alternative mounting arrangement, and shows the tubular jacket 22 of the cooling rod 20 passing downward through the hole in the upper wall 62. A circular flange 80 is formed at the lower end of the manifold 26 which is secured to the upper wall 62 via adhesive or bonding/welding. This mounting arrangement enables a more permanent connection which may be assembled by a manufacturer so that the process vessel 60 is shipped and sold as one with the cooling rod 20 installed.

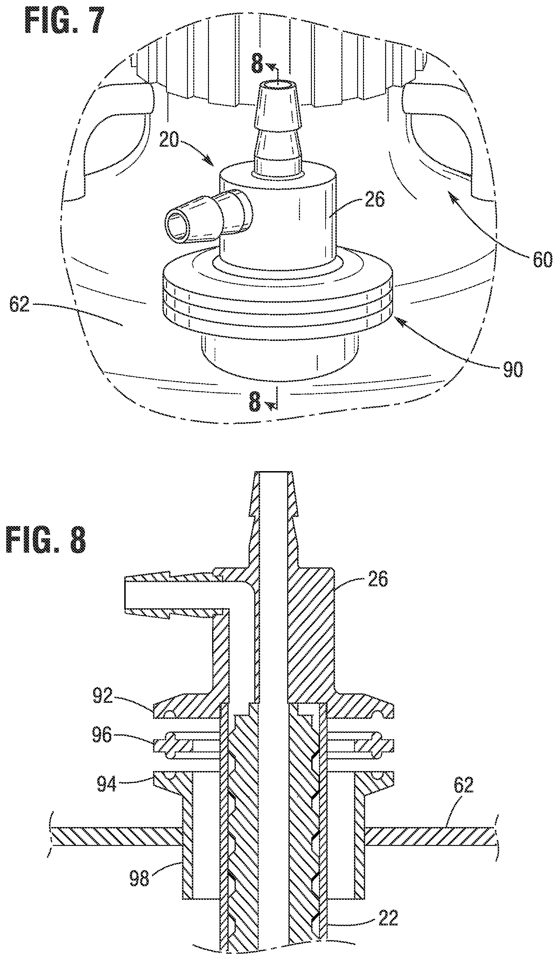

FIG. 7 is an enlargement of an upper wall 62 of a process vessel 60 showing a tri-clamp mounting assembly 90 for the process cooling rod 20. FIG. 8 shows the assembly 90 exploded, which includes an upper flange 92 and a lower flange 94 that together sandwich an elastomeric gasket 94 therebetween. The upper flange 92 is shown formed as an integral part of the manifold 26 of the cooling rod 20, though of course it may be formed separately and sealed thereto. The lower flange 94 is connected to a downwardly-directed tubular sleeve 98. The tubular sleeve 98 passes downward through the hole in the upper wall 62 and may be sealed or otherwise bonded or fastened thereto. A lower surface of the upper flange 92 and an upper surface of the lower flange 94 have circular grooves that mate with circular ribs on top and bottom of the elastomeric gasket 94, as shown.

Although not shown, an external mechanical clamp is used per convention to hold the three tri-clamp parts together temporarily for a sanitary hermetic seal. For instance, Sanitary Fittings, LLC of Muskego, WI provides a number of different such clamps at https://sanitaryfittings.us/product-category/fittings/clamp-fittings/clamps.

The tri-clamp mounting assembly 90 enables easy attachment and detachment of the process cooling rod 20, or an alternative device such as a sampling instrument. Conversely, a cap may be attached to the lower flange 94 to close the opening.

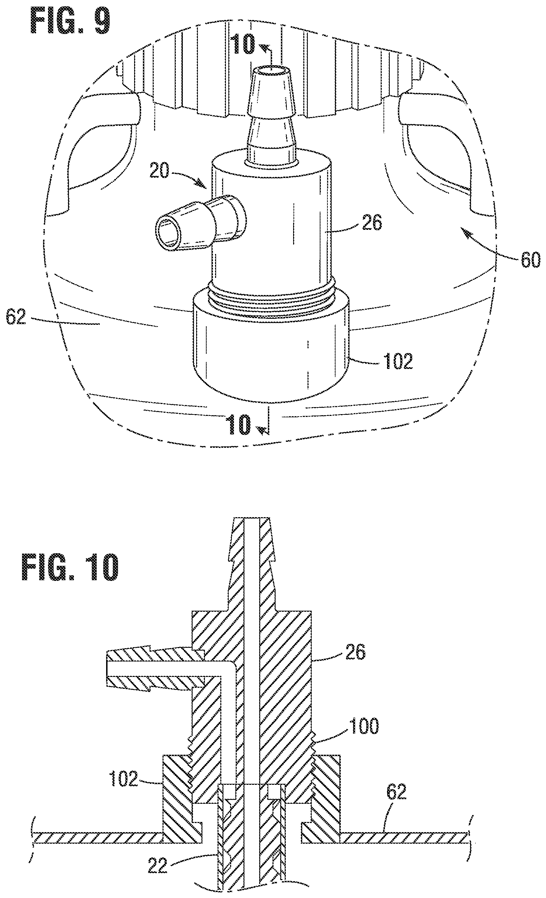

FIG. 9 is an enlargement of an upper wall 62 of a process vessel 60 showing a threaded mounting arrangement for the process cooling rod 20, and FIG. 10 is a vertical sectional view therethrough. In this assembly, male threads 100 formed at a lower end of the cooling rod manifold 26 mate with internal threads within a mounting sleeve 102. The sleeve 102, in turn, extends downward through the hole in the upper wall 62 and may be sealed or otherwise bonded or fastened thereto. The mating threads may be PG thread such as PG13.5 with a thread angle of 80°, commonly used for probes such as pH electrodes, Dissolved Oxygen (DO) probes, or temperature and conductivity probes, or they could be standard NPT thread, tapered or straight. This simple mounting architecture again enables easy attachment and detachment of the process cooling rod 20, or an alternative device such as a sampling instrument, or a plug may be attached to the mounting sleeve 102 to close the opening.

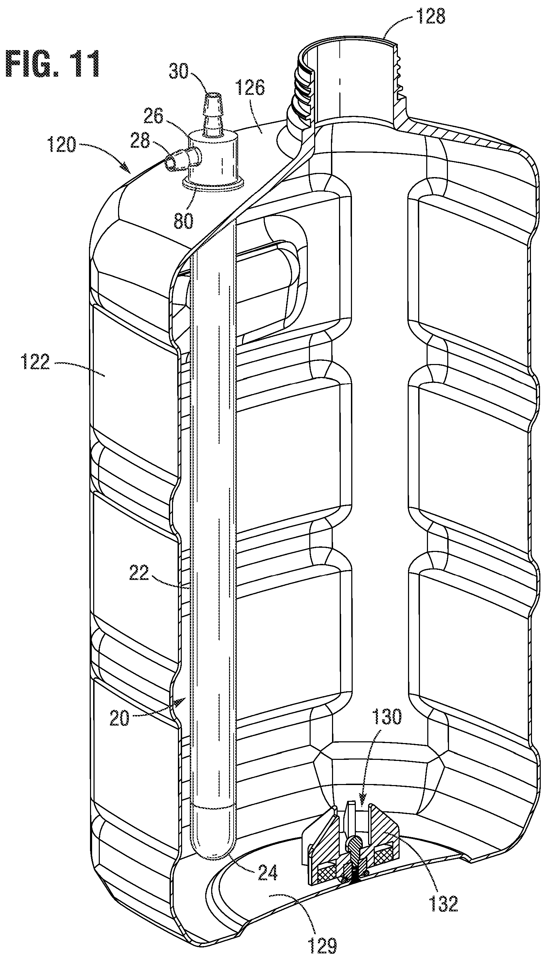

FIG. 11 is a cutaway perspective view of an exemplary flask or vessel 120 forming part of a process reactor and mixing system with which the process cooling rod 20 may be integrated. The vessel 120 includes a large main portion with vertical sidewalls 122 which may be reinforced with ribs or other stiffening features as shown, and may incorporate indents (not shown) on opposite sides that function as handles. An upwardly angled shoulder region or upper wall 126 leads to an upper opening 128, to which a cap (not shown) may be fastened for sealing the contents of the vessel. In some processes, the cap may include ports and tubes that extend downward for introducing or removing fluid from within the interior of the vessel 120, such as described in U.S. Patent No. 10,260,036 to Shor, et al.. The vessel 120 may be provided in volumes between 500 ml to 50 liters and made of PET or Polycarbonate.

FIG. 11 illustrates an internal mixer 130 with vanes 132 journaled to rotate about a vertical axis just above a lower floor 129 of the vessel. The mixer 130 is desirably rotated by an external magnetic drive (not shown and sometimes called a stir plate) below and outside of the vessel 120. For example, the mixer 130 may incorporate two diametrically opposed rare-earth or ceramic magnets that face the floor 129, and the magnetic drive has a rotating electromagnet or rotating rare-earth magnets (not shown) as well. Due to the close proximity to the mixer 130, the magnetic drive is able to rotate the mixer.

As described above, the cooling rod 20 extends downward into the process vessel 120 until the closed end cap 24 is in close proximity to the floor 129 of the vessel 120. In one embodiment, the length of the cooling rod 20 is such that when mounted through the top wall 126 the closed end cap 24 extends to within 2.54 cm (1 inch) of the floor 129 of the vessel 120. In this way, the cooling rod 20 reaches even very low levels of fluid in the bottom of the vessel to initiate heat exchange therewith. Moreover, the cooling rod 20 reaches the fluid surrounding the mixer 130 for effective simultaneous heat transfer and fluid agitation.

The helical structure of the flow diverter 32 maximizes the surface area of the outer helical cooling channel. Advantageously, the entire cooling rod 20 is made out of plastic. For instance, all of the components may be made out of transparent Polycarbonate which will allow video or still images to be taken of the flow as it flows. Preferably, the material is a plastic which is a) non-reactive, and b) one with as high a thermal transfer coefficient as possible, c) easy to manufacture, and d) recyclable. Stainless Steel and other non-reactive metals would work, though they are not perceived as disposable.

One exemplary material for use with the components of the cooling rod 20 is a highly heat conductive plastic termed Therma-Tech available from PolyOne Corporation of Avon Lake, Ohio. The Therma-Tech polymer formulation is a polypropylene base resin. A specific formulation given the product name X TT-10279-002-04 EI Natural (EM1003511360) by PolyOne has the following physical properties:

| **Property** | **Method** | **Value/units** |
|---|---|---|
| Specific Gravity | ASTM D792 | 1.37 |
| Tensile Strength at Break | ASTM D638 | 3573 psi |
| Elongation at Break | ASTM D638 | 3.0 % |
| Flexural Modulus | ASTM D790 | 354,000 psi |
| Flexural Strength at Yield | ASTM D790 | 6000 psi |
| Thermal Conductivity (TC) - In-plane | ASTM E1461 | 1.15 W/mK |
| Thermal Conductivity (TC) - Through -plane | ASTM E1461 | 0.98 W/mK |

Advantageously, the Therma-Tech polypropylene has a 40% higher thermal transfer rate than polycarbonate. Polycarbonates typically have a thermal transfer rate of between 0.19-0.22 W/mK @23C. Preferably, therefore, the polymer used has a thermal transfer rate of at least 0.50 W/mK @23C, and more preferably at least 0.90 W/mK @23C.

Terms such as top, bottom, left and right are used herein, though the fluid manifolds may be used in various positions such as upside down. Thus, some descriptive terms are used in relative terms and not absolute terms.

## Claims

1. A device comprising a process vessel (60) adapted for holding fluid, and a fluid process heat exchange rod (20) for heating or cooling fluid in the process vessel (60), the process vessel (60) having an upper wall (62), wherein the heat exchange rod (20) is mounted to the upper wall (62) of the process vessel (60), and wherein the heat exchange rod (20) comprises:
an elongated outer jacket (22) extending along an axis defining a closed distal end and an open proximal end, an inner cavity defined within the outer jacket (22);
a manifold (26) attached to the proximal end of the outer jacket (22), the manifold (26) having two connectors (28, 30) providing fluid communication with the inner cavity, a first connector (28) being offset from a centerline through the manifold (26) and a second connector (30) being located along the centerline and aligned with the outer jacket axis; and
an elongated flow diverter (32) positioned within the inner cavity, the flow diverter (32) extending from the manifold (26) to a point spaced from the closed distal end such that a distal space is formed in the inner cavity between the flow diverter (32) and the closed distal end, the flow diverter (32) having a central inner bore (42) extending the length of the flow diverter (32) and being in fluid communication with the second connector (30) to fluidly connect the second connector (30) and the distal space, the flow diverter (32) also having an outer surface defined by two parallel helical flutes (36) that extending the length of the flow diverter (32) and having an outer diameter approximately equal to an inner diameter of the outer jacket (22) so as to be in contact therewith, the helical flutes (36) defining two parallel helical grooves (38) spaced inward from the inner diameter of the outer jacket (22) that forms two parallel flow passages (40) between the flow diverter (32) and the outer jacket (22) fluidly connecting the first connector (28) and the distal space;
wherein the closed distal end of the outer jacket (22) extends downward toward a bottom of a main portion (61) of the process vessel (60) so as to be submerged in fluid within the process vessel (60), wherein the outer jacket (22) of the heat exchange rod (20) has a length sufficient such that the closed distal end is in close proximity with a lower floor (70) of the vessel (60), and
wherein the heat exchange rod (20) is configured such that fluid flowing into the second connector (30) passes distally through the inner bore (42) to the distal space, and returns proximally from the distal space through the flow passages (40) to the first connector (28), and fluid flowing into the first connector (28) passes distally through the flow passages (40) to the distal space, and returns proximally from the distal space through the inner bore (42) to the second connector (30), the fluid flowing through the heat exchange rod (20) therefore being adapted to heat or cool fluid within the process vessel (60).

2. The device of claim 1, wherein the heat exchange rod (20) is made of a non-reactive metal.

3. The device of claim 1, wherein at least the outer jacket (22) and the flow diverter (32) are injection molded of a polymer having a heat transfer coefficient of at least 0.50 W/mK at 23°C.

4. The device of claim 2, wherein the non-reactive metal is Stainless Steel.

5. The device of claim 3, wherein the polymer is a polypropylene base resin.

6. The device of claim 1, wherein the flow diverter (32) is polycarbonate.

7. The device of any previous claim, wherein the elongated outer jacket (22) is linear and tubular and the closed distal end is hemispherical.

8. The device of claim 1, wherein the process vessel (60) is a flask having a large main portion (61) and an upwardly angled shoulder region that forms the upper wall (62), and the heat exchange rod (20) mounts through a hole (69) formed in the upper wall (62).

9. The device of claim 8, wherein the heat exchange rod (20) detachably mounts through the hole (69) formed in the upper wall (62) using a tri-clamp assembly or a threaded connection.

10. The device of claim 8, wherein the heat exchange rod (20) is secured to the upper wall (62) via adhesive or bonding/welding.

11. The device of any previous claim, wherein the outer jacket (22) of the heat exchange rod (20) has a length sufficient to extend to within 2.54 cm (1 inch) of the lower floor (70) of the vessel (60).

12. The device of any previous claim, wherein the process vessel (60) includes a mixer (130) with vanes (132) positioned just above the lower floor (70) of the vessel (60) and journaled to rotate about a vertical axis.

13. The device of claim 12, wherein the mixer (130) incorporates magnets that face the lower floor (70) to enable rotation by an external magnetic drive.

14. The device of any of claims 12-13, wherein the outer jacket (22) of the heat exchange rod (20) has a length sufficient to extend to within 2.54 cm (1 inch) of the lower floor (70) of the vessel (60) and adjacent the mixer (130).

15. The device of any previous claim, wherein the helical flutes (36) have flat outer lands that define the outer diameter of the flow diverter (32) and contact an inner wall of the outer jacket (22).

## Patentansprüche

1. Vorrichtung, umfassend ein Prozessgefäß (60), das zum Halten von Fluid angepasst ist, und einen Fluidprozesswärmeaustauschstab (20) zum Erwärmen oder Kühlen von Fluid in dem Prozessgefäß (60), wobei das Prozessgefäß (60) eine obere Wand (62) aufweist, wobei der Wärmeaustauschstab (20) an der oberen Wand (62) des Prozessgefäßes (60) montiert ist, und wobei der Wärmeaustauschstab (20) umfasst:
eine längliche äußere Hülle (22), die sich entlang einer Achse erstreckt und ein geschlossenes distales Ende und ein offenes proximales Ende definiert, wobei ein innerer Hohlraum innerhalb der äußeren Hülle (22) definiert ist;
einen Verteiler (26), der an dem proximalen Ende der äußeren Hülle (22) befestigt ist, wobei der Verteiler (26) zwei Anschlüsse (28, 30) aufweist, die eine Fluidverbindung mit dem inneren Hohlraum bereitstellen, wobei ein erster Anschluss (28) von einer Mittellinie über den Verteiler (26) versetzt ist und ein zweiter Anschluss (30) entlang der Mittellinie gelegen und mit der Achse der äußeren Hülle ausgerichtet ist; und
einen länglichen Strömungsumlenker (32), der innerhalb des inneren Hohlraums positioniert ist, wobei sich der Strömungsumlenker (32) von dem Verteiler (26) zu einem Punkt erstreckt, der von dem geschlossenen distalen Ende derart beabstandet ist, dass ein distaler Raum in dem inneren Hohlraum zwischen dem Strömungsumlenker (32) und dem geschlossenen distalen Ende ausgebildet wird, wobei der Strömungsumlenker (32) eine zentrale innere Bohrung (42) aufweist, die sich über die Länge des Strömungsumlenkers (32) erstreckt und in Fluidverbindung mit dem zweiten Anschluss (30) steht, um den zweiten Anschluss (30) und den distalen Raum fluidisch zu verbinden, wobei der Strömungsumlenker (32) auch eine äußere Oberfläche aufweist, die durch zwei parallele spiralförmige Nuten (36) definiert ist, die sich über die Länge des Strömungsumlenkers (32) erstrecken und einen äußeren Durchmesser aufweisen, der etwa gleich einem inneren Durchmesser der äußeren Hülle (22) ist, um mit diesem in Kontakt zu stehen, wobei die spiralförmigen Nuten (36) zwei parallele spiralförmige Rillen (38) definieren, die nach innen von dem inneren Durchmesser der äußeren Hülle (22) beabstandet sind, die zwei parallele Strömungsdurchgänge (40) zwischen dem Strömungsumlenker (32) und der äußeren Hülle (22) ausbilden, die den ersten Anschluss (28) und den distalen Raum fluidisch verbinden;
wobei sich das geschlossene distale Ende der äußeren Hülle (22) nach unten zu einer Unterseite eines Hauptabschnitts (61) des Prozessgefäßes (60) hin erstreckt, um in Fluid innerhalb des Prozessgefäßes (60) eingetaucht zu sein, wobei die äußere Hülle (22) des Wärmeaustauschstabs (20) eine ausreichende Länge derart aufweist, dass das geschlossene distale Ende in enger Nähe zu einem unteren Boden (70) des Gefäßes (60) ist, und
wobei der Wärmeaustauschstab (20) derart konfiguriert ist, dass Fluid, das in den zweiten Anschluss (30) strömt, über die innere Bohrung (42) zu dem distalen Raum distal verläuft und von dem distalen Raum über die Strömungsdurchgänge (40) zu dem ersten Anschluss (28) proximal zurückkehrt, und Fluid, das in den ersten Verbinder (28) strömt, über die Strömungsdurchgänge (40) zu dem distalen Raum distal verläuft und von dem distalen Raum über die innere Bohrung (42) zu dem zweiten Anschluss (30) proximal zurückkehrt, wobei das Fluid, das über den Wärmeaustauschstab (20) strömt, daher angepasst ist, um Fluid innerhalb des Prozessgefäßes (60) zu erwärmen oder zu kühlen.

2. Vorrichtung nach Anspruch 1, wobei der Wärmeaustauschstab (20) aus einem nicht-reaktiven Metall hergestellt ist.

3. Vorrichtung nach Anspruch 1, wobei mindestens die äußere Hülle (22) und der Strömungsumlenker (32) aus einem Polymer spritzgegossen sind, das einen Wärmeübertragungskoeffizienten von mindestens 0,50 W/mK bei 23 °C aufweist.

4. Vorrichtung nach Anspruch 2, wobei das nicht-reaktive Metall rostfreier Stahl ist.

5. Vorrichtung nach Anspruch 3, wobei das Polymer ein Polypropylenbasisharz ist.

6. Vorrichtung nach Anspruch 1, wobei der Strömungsumlenker (32) Polycarbonat ist.

7. Vorrichtung nach einem der vorstehenden Ansprüche, wobei die längliche äußere Hülle (22) linear und röhrenförmig ist und das geschlossene distale Ende halbkugelförmig ist.

8. Vorrichtung nach Anspruch 1, wobei das Prozessgefäß (60) ein Kolben ist, der einen großen Hauptabschnitt (61) und einen nach oben abgewinkelten Schulterbereich aufweist, der die obere Wand (62) ausbildet, und der Wärmeaustauschstab (20) über ein Loch (69) montiert ist, das in der oberen Wand (62) ausgebildet ist.

9. Vorrichtung nach Anspruch 8, wobei der Wärmeaustauschstab (20) über das Loch (69), das in der oberen Wand (62) ausgebildet ist, unter Verwendung einer Tri-Clamp-Baugruppe oder einer Gewindeverbindung lösbar montiert wird.

10. Vorrichtung nach Anspruch 8, wobei der Wärmeaustauschstab (20) über Klebstoff oder Bonden/Schweißen an der oberen Wand (62) angebracht ist.

11. Vorrichtung nach einem der vorstehenden Ansprüche, wobei die äußere Hülle (22) des Wärmeaustauschstabs (20) eine Länge aufweist, die ausreicht, um sich bis auf 2,54 cm (1 Zoll) des unteren Bodens (70) des Gefäßes (60) zu erstrecken.

12. Vorrichtung nach einem der vorstehenden Ansprüche, wobei das Prozessgefäß (60) einen Mischer (130) mit Schaufeln (132) einschließt, die unmittelbar oberhalb des unteren Bodens (70) des Gefäßes (60) positioniert und gelagert sind, um sich um eine vertikale Achse zu drehen.

13. Vorrichtung nach Anspruch 12, wobei der Mischer (130) Magnete einbindet, die dem unteren Boden (70) zugewandt sind, um eine Drehung durch einen externen Magnetantrieb zu ermöglichen.

14. Vorrichtung nach einem der Ansprüche 12 bis 13, wobei die äußere Hülle (22) des Wärmeaustauschstabs (20) eine Länge aufweist, die ausreicht, um sich bis auf 2,54 cm (1 Zoll) des unteren Bodens (70) des Gefäßes (60) und angrenzend an den Mischer (130) zu erstrecken.

15. Vorrichtung nach einem der vorstehenden Ansprüche, wobei die spiralförmigen Nuten (36) flache äußere Stege aufweisen, die den äußeren Durchmesser des Strömungsumlenkers (32) definieren und eine innere Wand der äußeren Hülle (22) kontaktieren.

## Revendications

1. Dispositif comprenant une cuve de traitement (60) adaptée pour contenir un fluide, et une tige d'échange de chaleur de procédé de fluide (20) destinée à chauffer ou refroidir un fluide dans la cuve de traitement (60), la cuve de traitement (60) ayant une paroi supérieure (62), dans lequel la tige d'échange de chaleur (20) est montée sur la paroi supérieure (62) de la cuve de traitement (60), et dans lequel la tige d'échange de chaleur (20) comprend :
une enveloppe externe allongée (22) s'étendant le long d'un axe définissant une extrémité distale fermée et une extrémité proximale ouverte, une cavité interne définie à l'intérieur de l'enveloppe externe (22) ;
un collecteur (26) fixé à l'extrémité proximale de l'enveloppe externe (22), le collecteur (26) ayant deux raccords (28, 30) assurant une communication fluidique avec la cavité interne, un premier raccord (28) étant décalé par rapport à une ligne centrale à travers le collecteur (26) et un second raccord (30) étant situé le long de la ligne centrale et aligné sur l'axe de l'enveloppe externe ; et
un déviateur d'écoulement allongé (32) positionné dans la cavité interne, le déviateur d'écoulement (32) s'étendant du collecteur (26) à un point espacé de l'extrémité distale fermée de telle sorte qu'un espace distal est formé dans la cavité interne entre le déviateur d'écoulement (32) et l'extrémité distale fermée, le déviateur d'écoulement (32) ayant un alésage interne central (42) s'étendant sur la longueur du déviateur d'écoulement (32) et étant en communication fluidique avec le second raccord (30) pour relier de manière fluide le second raccord (30) et l'espace distal, le déviateur d'écoulement (32) ayant également une surface externe définie par deux cannelures hélicoïdales parallèles (36) qui s'étendent sur la longueur du déviateur d'écoulement (32) et ayant un diamètre externe approximativement égal à un diamètre interne de l'enveloppe externe (22) de manière à être en contact avec celle-ci, les cannelures hélicoïdales (36) définissant deux rainures hélicoïdales parallèles (38) espacées vers l'intérieur à partir du diamètre interne de l'enveloppe externe (22) qui forme deux passages d'écoulement parallèles (40) entre le déviateur d'écoulement (32) et l'enveloppe externe (22) reliant de manière fluidique le premier raccord (28) et l'espace distal ;
dans lequel l'extrémité distale fermée de l'enveloppe externe (22) s'étend vers le bas en direction d'un fond d'une partie principale (61) de la cuve de traitement (60) de manière à être immergée dans le fluide à l'intérieur de la cuve de traitement (60), dans lequel l'enveloppe externe (22) de la tige d'échange de chaleur (20) a une longueur suffisante de telle sorte que l'extrémité distale fermée soit à proximité immédiate d'un plancher inférieur (70) de la cuve (60), et
dans lequel la tige d'échange de chaleur (20) est conçue de telle sorte que le fluide s'écoulant dans le second raccord (30) passe de manière distale à travers l'alésage interne (42) jusqu'à l'espace distal, et retourne de manière proximale à partir de l'espace distal à travers les passages d'écoulement (40) jusqu'au premier raccord (28), et le fluide s'écoulant dans le premier raccord (28) passe de manière distale à travers les passages d'écoulement (40) jusqu'à l'espace distal, et retourne de manière proximale depuis l'espace distal à travers l'alésage interne (42) au second raccord (30), le fluide circulant à travers la tige d'échange de chaleur (20) étant donc adapté pour chauffer ou refroidir le fluide à l'intérieur de la cuve de traitement (60).

2. Dispositif selon la revendication 1, dans lequel la tige d'échange de chaleur (20) est constituée d'un métal non réactif.

3. Dispositif selon la revendication 1, dans lequel au moins l'enveloppe externe (22) et le déviateur d'écoulement (32) sont moulés par injection d'un polymère ayant un coefficient de transfert de chaleur d'au moins 0,50 W/mK à 23 °C.

4. Dispositif selon la revendication 2, dans lequel le métal non réactif est de l'acier inoxydable.

5. Dispositif selon la revendication 3, dans lequel le polymère est une résine à base de polypropylène.

6. Dispositif selon la revendication 1, dans lequel le déviateur d'écoulement (32) est en polycarbonate.

7. Dispositif selon l'une quelconque revendication précédente, dans lequel l'enveloppe externe allongée (22) est linéaire et tubulaire et l'extrémité distale fermée est hémisphérique.

8. Dispositif selon la revendication 1, dans lequel la cuve de traitement (60) est une fiole ayant une grande partie principale (61) et une région d'épaulement inclinée vers le haut qui forme la paroi supérieure (62), et la tige d'échange de chaleur (20) se monte à travers un trou (69) formé dans la paroi supérieure (62).

9. Dispositif selon la revendication 8, dans lequel la tige d'échange de chaleur (20) se monte de manière amovible à travers le trou (69) formé dans la paroi supérieure (62) à l'aide d'un ensemble à trois pinces ou d'un raccord fileté.

10. Dispositif selon la revendication 8, dans lequel la tige d'échange de chaleur (20) est fixée à la paroi supérieure (62) par adhésif ou collage/soudage.

11. Dispositif selon l'une quelconque revendication précédente, dans lequel l'enveloppe externe (22) de la tige d'échange de chaleur (20) a une longueur suffisante pour s'étendre jusqu'à 2,54 cm (1 pouce) du plancher inférieur (70) de la cuve (60).

12. Dispositif selon l'une quelconque revendication précédente, dans lequel la cuve de traitement (60) comporte un mélangeur (130) avec des aubes (132) positionnées juste au-dessus du plancher inférieur (70) de la cuve (60) et tourillonnées pour tourner autour d'un axe vertical.

13. Dispositif selon la revendication 12, dans lequel le mélangeur (130) incorpore des aimants qui font face au plancher inférieur (70) pour permettre une rotation par un entraînement magnétique externe.

14. Dispositif selon l'une quelconque des revendications 12 à 13, dans lequel l'enveloppe externe (22) de la tige d'échange de chaleur (20) a une longueur suffisante pour s'étendre jusqu'à 2,54 cm (1 pouce) du plancher inférieur (70) de la cuve (60) et adjacente au mélangeur (130).

15. Dispositif selon l'une quelconque revendication précédente, dans lequel les cannelures hélicoïdales (36) ont des plages externes plates qui définissent le diamètre extérieur du déviateur d'écoulement (32) et entrent en contact avec une paroi interne de l'enveloppe externe (22).
